# EUROPÄISCHE PATENTSCHRIFT

(11) **EP 1 457 707 B1**
(45) Veröffentlichungstag und Bekanntmachung des Hinweises auf die Patenterteilung: **05.11.2008**
(21) Anmeldenummer: 04003095.9
(22) Anmeldetag: 12.02.2004
(51) Int. Cl.: F16F 13/14, F16F 1/38, B61F 5/30

(54) **Verwendung einer Buchse in einem Laufwerk für ein Schienenfahrzeug**
Use of a bushing in a running gear of a railway vehicle
Utilisation d'un palier dans un chariot d'un véhicule sur rails

(30) Priorität: 10.03.2003 DE 10310633
(43) Veröffentlichungstag der Anmeldung: 15.09.2004
(73) Patentinhaber: Carl Freudenberg KG, 69469 Weinheim (DE); Schwab Schwingungstechnik AG, 8134 Adliswil (CH)
(72) Erfinder: Marzillier, Wolfgang, 13055 Berlin (DE); Gürtler, Daniel, 12057 Berlin (DE); Biber, Rolf, 8050 Zürich (CH); Schwab, Peter, 8134 Adliswil (CH)

(56) Entgegenhaltungen:
- EP-A- 0 360 783
- EP-A- 1 228 937
- DE-A- 3 831 644
- DE-A- 19 618 688
- FR-A- 2 747 166
- US-A- 4 899 997
- US-A- 4 964 623
- US-A- 5 199 691

## Beschreibung

### Technisches Gebiet

Die Erfindung betrifft die Verwendung einer Buchse als Bauteil eines Lagers zur elastischen Verbindung von Teilen eines Laufwerks für Schienenfahrzeuge, wobei die Buchse ein äußeres und ein inneres Gehäuse, die einander in radialem Abstand umschließen, um einen Ringspalt zu bilden umfasst, wobei in dem Ringspalt ein gummielastisches Element vorgesehen ist, das zumindest teilweise wenigstens zwei einander diametral gegenüberliegende Kammern begrenzt, die mit einem hydraulischen Fluid gefüllt sind und über wenigstens einen Überlaufkanal miteinander verbunden sind.

### Stand der Technik

Aus der EP 0 360 783 B1 ist eine Radsatzlagerung mit einer Zylinderradsatzführung mit einer hydraulischen Radsatzführungsbuchse bekannt. Eine Zylinderradsatzführung zeichnet sich dadurch aus, dass beidseitig vom Radsatzlagergehäuse eine Primärfeder angeordnet ist. Zentrisch in jeder Feder ist ein zylindrischer Schaft angebracht, der mit dem Fahrgestell verbunden ist und auf dem die sogenannte Radsatzführungsbuchse montiert ist. Diese gleitet axial (vertikal) in einer im Radsatzlagergehäuse eingebrachten Bohrung. Die Buchse nimmt hierbei Kräfte in Fahrtrichtung sowie in Querrichtung auf. Axiale Kräfte können in Abhängigkeit von den Reibungsverhältnissen an der Gleitstelle auf die Buchse einwirken.

Bei der bekannten Buchse ist zwischen zwei konzentrischen Ringen ein gummielastisches Element einvulkanisiert, das zwei in Fahrtrichtung einander diametral gegenüberliegende, im Querschnitt ringsektorförmige und durch mindestens einen Überströmkanal miteinander verbundene Kammern mit einem hydraulischen Fluid zumindest teilweise begrenzt. In einer bevorzugten Ausführungsform ist in dem Überströmkanal eine Verstellvorrichtung mit einer in ihrem Querschnitt veränderlichen Drossel vorgesehen. Aufgabe dieser Verstellvorrichtung soll sein, das Steifigkeitsverhalten der Buchse durch Öffnen oder (teilweise) Sperren des Überströmkanals je nach Bedarf, zum Beispiel auch während der Fahrt, beliebig einstellen zu können. Zu diesem Zweck ist das gummielastische Element in einzelne Segmente unterteilt, die so angeordnet sind, dass sie je nachdem, ob das hydraulische Fluid ungehindert von einer in die andere Kammer strömen kann bzw. dieses Überströmen ganz oder teilweise unterbunden wird und es dadurch zu einem Druckaufbau in einer Kammer kommt, einzeln oder gemeinsam zur Gesamtsteifigkeit des Systems beitragen solllen.

Nachteilig an der bekannten Buchse ist, dass für die Einstellung eines gewünschten Steifigkeitsverlaufs eine Verstellvorrichtung benötigt wird, die zusätzlich noch von Hilfsenergie abhängig ist. Zusätzlich ist die Verstellvorrichtung in einem Bereich des Fahrgestells angeordnet, der größten mechanischen Belastungen ausgesetzt ist, so dass ein ordnungsgemäßer Betrieb kaum zu gewährleisten ist. Bei einem Ausfall der Verstellvorrichtung ist aber eine Anpassung der Steifigkeit an die spezielle Fahrsituation nicht mehr möglich. Dies kann zu Sicherheitsproblemen bis hin zu Entgleisung führen.

In der EP-A-1 228 937, die den gattungsgemäßen Stand der Technik bildet, wird eine Vorrichtung für die Führung der Achsen des Drehgestells eines Schienenfahrzeugs beschrieben, welche ein elastisch-hydraulisches Antriebsgelenk zum Einstellen der Steifigkeit des Drehgestells abhängig von der Fahrsituation umfasst. Das elastisch-hydraulische Antriebsgelenk arbeitet nach dem Prinzip eines Hydraulikzylinders. Hierzu weist es eine zylinderförmige Fluidbuchse auf, die einen Elastomerkörper und zwei mit einer Hydraulikflüssigkeit gefüllte Hohlräume umfasst. Die Fluidbuchse umgibt eine mit dem Drehgestellrahmen verbundene zentrale Welle. Die Hohlräume werden jeweils über eine Leitung von einer äußeren Verteilerquelle her mit Fuid beaufschlagt in der Weise, dass die Welle in Längsrichtung x der Fahrt zu einer Seite oder zur gegenüberliegenden Seite der Fluidbuchse verschoben wird. Zwischen den Hohlräumen befindet sich eine Zwischenleitung mit einem vorgegebenen Querschnitt für die gesteuerte Übertragung der Flüssigkeit von einem Hohlraum in den anderen. Der gesteuerte Durchfluss der Flüssigkeit von einem zum anderen Hohlraum über die Zwischenleitung erfolgt in der Weise, dass eine eine Bewegung in Längsrichtung x des Drehgestells abdämpfende Wirkung hervorgerufen und eine Anpassung der Steifigkeitswerte der Federung des Drehgestells in beiden Durchfahrsituationen des Fahrzeugs auf gerader Strecke und in Kurven in Funktion von der Erregungsfrequenz erzielt wird.

Auch diese Vorrichtung weist die oben beschriebenen Nachteile der hohen Fehleranfälligkeit und damit verminderten Betriebssicherheit auf.

### Darstellung der Erfindung

Aufgabe der Erfindung ist, eine Vorrichtung der gattungsgemäßen Art so weiterzubilden, dass Fehlerquellen bei der Einstellung eines gewünschten Steifigkeitsverlaufs, insbesondere bei der Anpassung der Steifigkeit an die aktuelle Fahrsituation, reduziert und damit die Betriebssicherheit erhöht wird.

Diese Aufgabe wird gelöst mit der Verwendung einer Buchse gemäß allen Merkmalen des Patentanspruchs 1. Bevorzugte Ausführungsformen sind in den Patentansprüchen 3 bis 5 beschrieben.

Erfindungsgemäß wird als Bauteil eines Lagers zum elastischen Verbinden von Teilen eines Lagerwerks für Schienenfahrzeuge eine Buchse verwendet, welche ein äußeres und ein inneres Gehäuse umfasst, die einander in radialem Abstand umschließen, um einen Ringspalt zu bilden, wobei in dem Ringspalt ein gummielastisches Element vorgesehen ist, das wenigstens zwei einander diametral gegenüberliegende Kammern zumindest teilweise begrenzt, die mit einem hydraulischen Fluid gefüllt sind und über wenigstens einen Überlaufkanal miteinander verbunden sind, wobei der Überlaufkanal als passiver Schwingungstiiger, ohne externe Steuerung des Fluidstroms, ausgebildet ist.

Die vorliegende Erfindung macht sich dabei den beispielsweise aus dem Gebiet der Hydrolager bekannten Effekt zunutze, dass eine Flüssigkeitssäule in einem Kanal, der zwei Kammern mit gummielastischen Wänden begrenzt, ein schwingungsfähiges System mit bestimmten Eigenfrequenzen darstellt. Schwingt diese Flüssigkeitssäule im Gegentakt zu einer von aussen ufgezwungenen Schwingung, so wirkt sie als Tilger. Hierdurch lässt sich nicht nur eine deutlich höhere Dämpfung erzielen, als sie alleine durch eine Verengung des Strömungsquerschnitts erzielbar wäre. Der maßgebliche Vorteil besteht darin, dass alleine durch eine entsprechende konstruktive Ausgestaltung des Dämpfungskanals ein Steifigkeitsverlauf eingestellt werden kann, der sowohl zu einem verringerten Rad-Schienenverschleiß als auch zu einer erhöhten Fahrsicherheit bei hohen Geschwindigkeiten führt. So ist beipielsweise bei langsamen Verformungen, d. h. niedrigen Frequenzen der anregenden Schwingung, so wie sie zum Beispiel bei Kurvenfahrten auftreten, eine geringe Steifigkeit gewünscht. Bei hohen Geschwindigkeiten und damit hohen Frequenzen führt die Weichheit zu Stabilitätsproblemen, so dass in diesem Bereich ein hartes Lager gewünscht ist. Der Übergang von niedriger zu hoher Steifigkeit sollte bei Überschreiten einer sogenannten Schaltfrequenz möglichst steil erfolgen. Mit Hilfe der Buchse lässt sich ein solcher Steifigkeitsverlauf alleine über die Kanalgestaltung einstellen, ohne dass es hierzu einer entsprechenden Schalt- oder Verstellvorrichtung bedarf. Damit wird die Zahl möglicher Fehlerquellen deutlich reduziert und die Betriebssicherheit erhöht.

Da es sich bei der Schwingungstilgung mittels schwingender Flüssigkeitssäulen um eine auf dem vorliegenden Anwendungsgebiet zwar bislang noch nicht eingesetzte, aber gleichwohl an sich bekannte Technik handelt, ist dem Fachmann das Auffinden geeigneter Parameter zur Erzielung einer gewünschten Dämpfungscharakteristik leicht möglich. So ist es bekannt, dass die Dämpfungscharakteristik, d. h. die Lage des Dämpfungsmaximums, die Breite des Dämpfungsbereichs und insbesondere die Steilheit des Steifigkeitsübergangs, in einfacher Weise über die Kanallänge, die Größe und die Geometrie der Querschnittsfläche des Dämpfungskanals sowie über die Viskosität des hydraulischen Fluids beeinflußbar ist. Die Einstellung der obigen Parameter hängt vom jeweiligen Anwendungsfall ab, d. h. davon, welche Dämpfungscharakteristik speziell gewünscht ist.

Es hat sich gezeigt, dass sich der gewünschte Tilgereffekt am einfachsten durch Verlängerung des Überlaufkanals unter Beibehaltung der ansonsten üblichen Buchsengeometrien verwirklichen lässt. Dies hat den großen Vorteil, dass eine erfindungsgemäße Buchse in übliche Bauräume eingesetzt werden kann. Eine spezielle Anpassung an die erfindungsgemäße Buchse ist nicht nötig.

Eine deutliche Erhöhung der Steifigkeit bei hohen Frequenzen und ein steiler Steifigkeitsverlauf im Bereich der Schaltfrequenz lässt sich mit Kanallängen erreichen, die ein Mehrfaches des Buchsendurchmessers betragen. Große Kanallängen lassen sich am einfachsten dadurch realisieren, dass Überlaufkanal im wesentlichen wendel-, spiral- und/oder mäanderförmig ausgebildet wird. Vorteilhafterweise wird er dabei am Aussen- und/oder Innenumfang der Buchse und/oder eines Gehäuseteils der Buchse entlanggeführt. Die Forderung nach Beibehaltung des üblichen Bauraums lässt sich auf diese Weise besonders einfach realisieren.

In einer besonders bevorzugten Ausführungsform der Erfindung wird der Überlaufkanal durch die Innenwandung des inneren Gehäuseteils und eine am Aussenumfang des von der Buchse umschlossenen bolzenförmigen Elements umlaufende Nut begrenzt. Diese Ausführungsform lässt sich besonders einfach herstellen.

Die erfindungsgemäße Verwendung ist nicht nur auf die eingangs beschriebene Zylinderradsatzführung beschränkt. Sie kann überall da zur Anwendung kommen, wo Teile eines Laufwerks eines Schienfahrzeugs über ein Lager elastisch miteinander verbunden werden sollen. Eine bevorzugte Verwendung ist der Einsatz einer erfindungsgemäßen Buchse in einem Achslenkerlager bei einer Radsatzführung durch Lenker in einem Laufwerk für Schienenfahrzeuge, wie nachfolgend anhand der Figuren näher beschrieben wird.

### Kurzbeschreibung der Zeichnungen

Nachfolgend wird die Erfindung anhand der Figuren näher erläutert.

Es zeigen:
- Figur 1:: ein Achslenkerlager mit einer erfindungsgemäßen Buchse in einer schematischen Längsschnitt-Darstellung;
- Figur 2:: das Achslenkerlager aus Fig. 1 in einer schematischen Querschnittsdarstellung;
- Figur 3:: in einer schematischen Längsschnittdarstellung die Einbausituation eines Achslenkerlagers mit einer erfindungsgemäßen Buchse;
- Figur 4:: die Einflußnahme auf den Steifigkeits- und Dämpfungsverlaufs eines Achslenkerlagers mit einer erfindungsgemäßen Buchse durch Variation der Kanallänge des Überlaufkanals; Ausführung der Erfindung

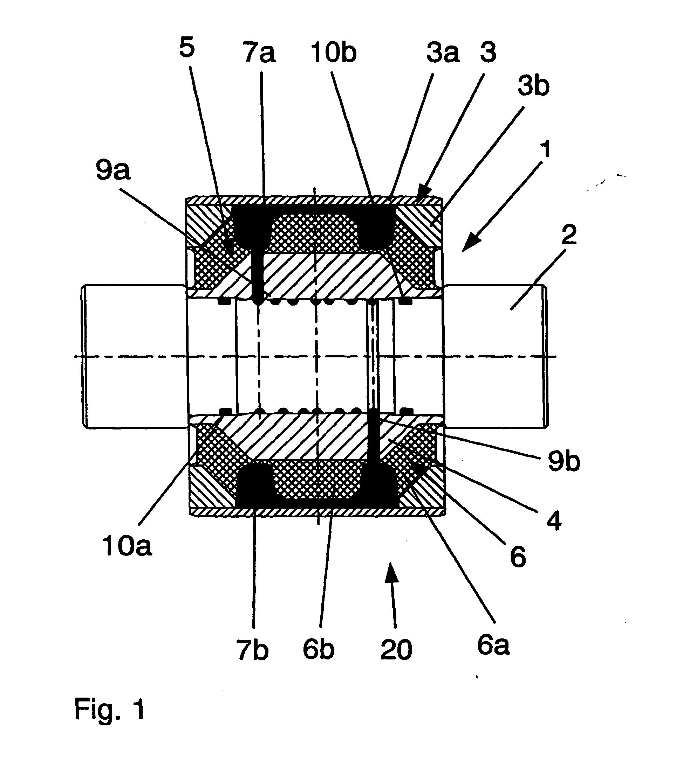

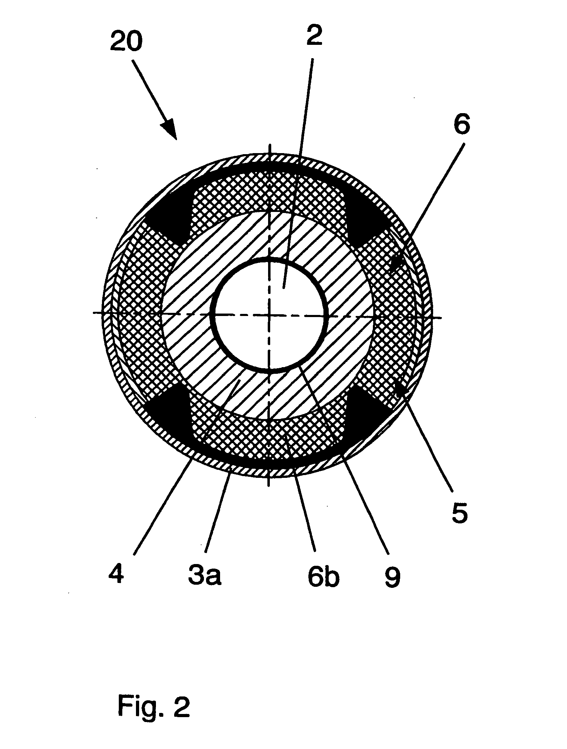

Man erkennt in den Figuren 1 und 2 ein Achslenkerlager 20 mit einer erfindungsgemäß eingesetzten Buchse 1, die einen Bolzen 2, den sogenannten Lenkerbolzen, umschließt. Die Buchse 1 umfasst ein äußeres und ein inneres Gehäuseteil 3 bzw. 4, wobei das äußere Gehäuseteil 3 in der Figur ohne Beschränkung der Allgemeinheit durch eine Hülse 3a und einen Stützring 3b gebildet wird. Das äußere und das innere Gehäuseteil 3 bzw. 4 umschließen einander in radialem Abstand, um so einen Ringspalt 5 zu bilden, in dem ein gummielastisches Element 6 angeordnet ist. Das gummielastische Element 6 ist in der Figur ohne Beschränkung der Allgemeinheit in 3 Segmente unterteilt, wobei die stirnseitig angeordneten Segmente 6a die Blähfeder und die Segmente 6b Anschlagelemente bilden. Die die Tragfeder bildenden Segmente sind bei der Schnittdarstellung in Figur 1 nicht erkennbar.

Das gummielastische Element 6 begrenzt radial nach innen hin zwei in Fahrtrichtung diametral einander gegenüberliegende Kammern 7a, 7b, die mit einem hydraulischen Fluid gefüllt sind. Die äußere Begrenzung wird ohne Beschränkung der Allgemeinheit durch die Innenwandung des außeren Gehäuseteils 3 gebildet. Die Kammern 7a, 7b könnten alternativ auch vollständig von dem gummielastischen Element 6 begrenzt werden.

Die Steifigkeitscharakteristik des Lagers 20 wird u. a. entscheidend durch die Geometrie des gummielastischen Elements 6 sowie die geometrische Ausbildung der Kammern 7a, 7b beeinflußt, wobei das Auffinden einer geeigneten geometrischen Ausbildung zur Erzielung einer gewünschten Einflußnahme auf den Steifigkeitsverlauf, wie bereits oben beschrieben ist, im Bereich des Fachwissens des Durchschnittsfachmanns liegt.

Die Gehäuseteile 3a, 3b und 4 bestehen vorzugsweise aus Stahl, das gummielastische Element 6 vorzugsweise aus einem einvulkanisierten Elastomer, beispielsweise aus Naturkautschuk.

Die Kammern 7a und 7b sind über einen Kanal 9 hydraulisch miteinander verbunden. Der Kanal 9 ist als Schwingungstilger ausgebildet und wird in seinem mittleren Bereich durch eine wendelförmig am Aussenumfang des bolzenförmigen Elements 2 umlaufende Nut und die Innenwandung des inneren Gehäuseteils 4 begrenzt. Am oberen und unteren Ende der Wendel setzt sich der Kanal 9 jeweils in im Wesentlichen horizontal durch die Wandung des innere Gehäuseteils 4 geführte Kanalelemente 9a, 9b fort, die zur Herstellung der hydraulischen Verbindung in die jeweils zugeordnete Kammer 7a bzw. 7b münden. Das Verhältnis zwischen Kanalquerschnitt und Kanallänge ist so gewählt, dass der Tilger im Übergangsbereich der Steifigkeit auf betriebsbedingte Schwingungen anspricht. Die Flüssigkeitssäule schwingt dabei im Gegentakt zu der von aussen aufgezwungenen Schwingung und wirkt als Tilger.

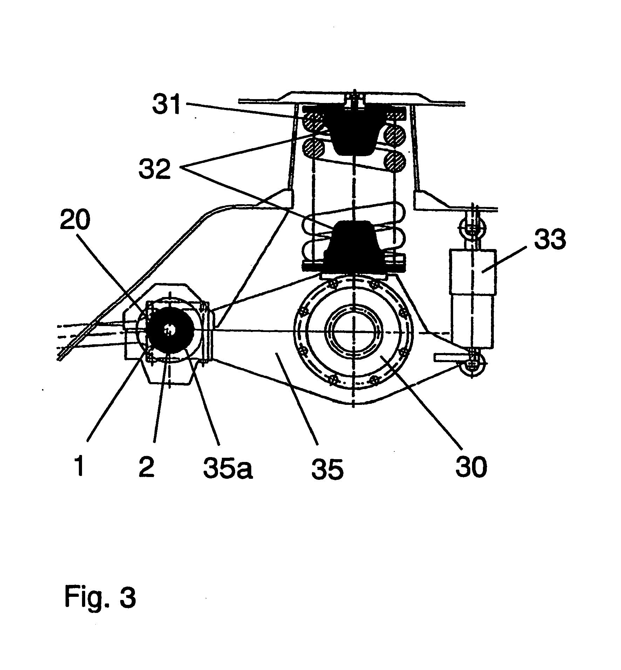

Fig. 3 zeigt die Einbausituation eines Achslenkerlagers 20 mit einer erfindungsgemäßen Buchse 1. Man erkennt in der Figur ein Radsatzlagergehäuse 30, über dem eine Primärfeder 31 mit Anschlägen 32 angeordnet ist. Man erkennt weiterhin einen Stoßdämpfer 33. Das Radsatzlagergehäuse 30 ist über einen Achslenker 35 und das Achslenkerlager 20 mit dem Fahrgestell beispielsweise eines Scheinenfahrzeugs verbunden. Das Achslenkerlager umfasst einen Bolzen 2, den sogenannten Lenkerbolzen, der von dem Lenkerauge 35a des Achslenkers 35 umschlossen ist. Zwischen dem Lenkerbolzen und dem Lenkerauge 35a befindet sich als Federelement die erfindungsgemäße Buchse 1. Das Achslenkerlager 20 hat die Aufgabe, Längskräfte (Fahrtrichtung und Richtung der Hydraulik) und Querkräfte sowie die Torsionsbewegungen bei der Einfederung der Primärfeder und die Kardanik zu übertragen.

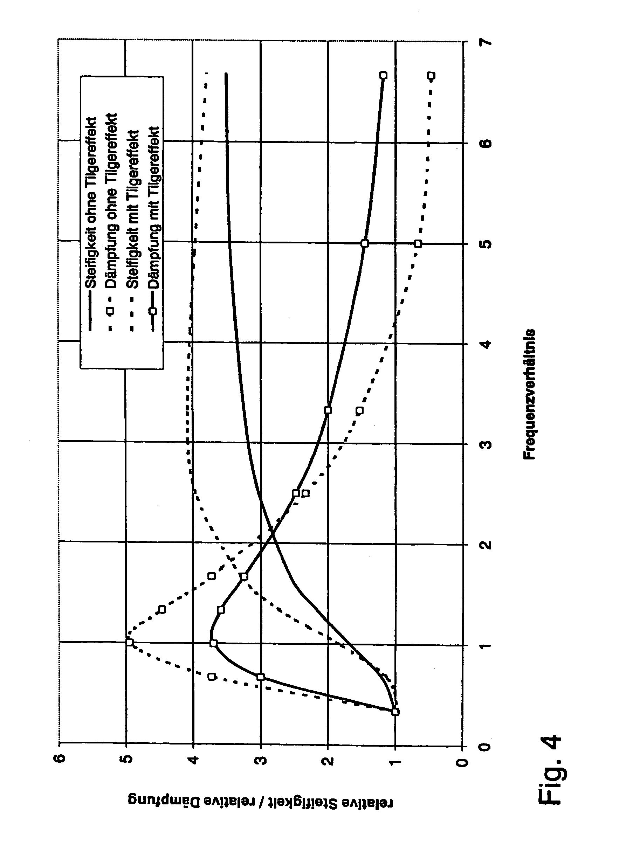

Fig. 4 zeigt als Beispiel für eine mögliche Beeinflussung der Lagercharakteristik einer hydraulischen Buchse mittels eines als Schwingungstilgers ausgebildeten Verbindungskanals den Steifigkeitsverlauf in Abhängigkeit von der Frequenz für zwei unterschiedliche Kanallängen. Dargestellt sind jeweils die relative, d. h. auf die statischen Werte bezogene Dämpfung und Steifigkeit als Funktion der relativen, auf das Dämpfungsmaximum bezogenen Frequenz. Die Messwerte wurden an Modellbuchsen gewonnen. Das Verhältnis von Kanallänge zu Kanalquerschnitt der Buchse ohne Tilger betrug 40:1, das entsprechende Verhältnis der Buchse mit Tilger 400:1. Die größere Kanallänge wurde durch eine am Aussenumfang des Bolzens wendelartig umlaufende Nut realisiert. Als hydraulisches Fluid wurde ein Glykol-Wasser-Gemisch verwendet.

Man erkennt in der Figur, dass bei beiden Kurven bei niedrigen Frequenzen die Steifigkeit gering ist, während die Dämpfung ein Maximum erreicht. Erwartungsgemäß ist das Maximum bei größerem Verhältnis von Kanallänge zu Kanalquerschnitt deutlich höher. Beide Lager sind weich, die Flüssigkeitssäulen schwingen im Gegentakt zur anregenden Schwingung, die Dämpfung ist groß. Mit zunehmender Frequenz findet bei beiden Lagern ein Übergang von niedriger zu hoher Steifigkeit statt, wobei der Übergang bei der Buchse mit ausgeprägterem Tilger deutlich steiler erfolgt. Beide erfindungsgemäßen Lager schalten somit bei Erreichen einer durch die Buchsengeometrie vorgegebenen Schaltfrequenz, so wie für den Anwendungsfall Schienenfahrzeug gewünscht, selbsttätig, d. h. und ohne jeglichen Schalt- oder Verstellmechanismus auf eine höhere Steifigkeit um, wobei die Schaltfrequenz bei der Buchse mit ausgeprägterem Tilger deutlich schärfer definiert ist.

Das beschriebene Verhalten ist darauf zurückzuführen, dass mit Erhöhung der Anregungsfrequenz die Flüssigkeitssäule in dem Kanal der anregenden Schwingung zunehmend nicht mehr folgen kann, der Flüssigkeitsübertritt von einer Kammer in die andere ist praktisch unterbunden. Hieraus resultiert ein Druckaufbau in den Kammern, die Trag- und die Blähfeder kommen mit ihren Steifigkeiten zum Tragen, die Steifigkeit läuft auf einen maximalen Grenzwert zu, der durch die Summe der Steifigkeiten der Trag- und der Blähfeder bestimmt wird.

Die Schaltfrequenz liegt vorzugsweise zwischen 0,1 bis 1 Hz, was sich beispielsweise über die Kanalgeometrie ohne weiteres einstellen lässt.

Erfindungsgemäß wird die in Patentanspruch 1 und den Unteransprüchen beschriebenen Buchse zur Achsführung bei Schienenfahrzeugen in Fahrtrichtung mit frequenzabhängiger Steifigkeit und Dämpfung im Schaltpunkt, insbesondere mittels eines Achselenkers, eingesetzt, wobei die Buchse im Achslenkerlager zum Einsatz kommt.

## Patentansprüche

1. Verwendung einer Buchse als Bauteil eines Lagers zum elastischen Verbinden von Teilen eines Laufwerks für Schienfahrzeuge, wobei die Buchse ein äußeres und ein inneres Gehäuse, die einander in radialem Abstand umschließen, um einen Ringspalt zu bilden, umfasst, wobei in dem Ringspalt ein gummielastisches Element vorgesehen ist, das zumindest teilweise wenigstens zwei einander diametral gegenüberliegende Kammern begrenzt, die mit einem hydraulischen Fluid gefüllt sind und über wenigstens einen Überlaufkanal miteinander verbunden sind, **dadurch gekennzeichnet, dass** der Überlaufkanal als passiver Schwingungstilger ohne externe Steuerung des Fluidstroms ausgebildet ist.

2. Verwendung einer Buchse nach Anspruch 1, **dadurch gekennzeichnet, dass** der Überlaufkanal (9) spiral-, wendel- oder mäanderförmig ausgebildet ist.

3. Verwendung nach Anspruch 1 oder 2, **dadurch gekennzeichnet, dass** der Überlaufkanal am Aussen- und/oder Innenumfang der Buchse (1) geführt ist.

4. Verwendung nach einem der Ansprüche 1 bis 3, **dadurch gekennzeichnet, dass** der Überlaufkanal (9) durch die Innenwandung des inneren Gehäuseteils (4) und eine wendelförmige Nut im Aussenumfang eines von der Buchse (1) umschlossenen bolzenförmigen Elements (2) begrenzt wird.

5. Verwendung nach einem der Ansprüche 1 bis 4, **dadurch gekennzeichnet, dass** das Lager ein Achslenkerlager ist.

## Claims

1. Use of a bushing as a component of a bearing for elastically connecting parts of a set of running gear for rail vehicles, wherein the bushing comprises an external housing and an internal housing, one of which surrounds the other at a radial distance in order to form an annular gap, wherein a rubber-elastic element is provided in the annular gap, said element bounding at least partially at least two chambers which lie diametrically opposite one another, are filled with a hydraulic fluid and are connected to one another via at least one overflow duct, **characterized in that** the overflow duct is embodied as the passive vibration damper without external control of the flow of fluid.

2. Use of a bushing according to Claim 1, **characterized in that** the overflow duct (9) is embodied in the shape of a spiral, helix or in a meandering shape.

3. Use according to Claim 1 or 2, **characterized in that** the overflow duct is made to extend along the external circumference and/or internal circumference of the bushing (1).

4. Use according to one of Claims 1 to 3, **characterized in that** the overflow duct (9) is bounded by the internal Wall of the internal housing component (4) and a helical groove in the external circumference of a bolt-shaped element (2) which is surrounded by the bushing (1).

5. Use according to one of Claims 1 to 4, **characterized in that** the bearing is an axle guide bearing.

## Revendications

1. Utilisation d'un coussinet comme d'un élément d'un palier permettant de relier de façon élastique des parties d'un chariot pour véhicules sur rails, le coussinet comprenant un boîtier extérieur et un boîtier intérieur, s'entourant l'un l'autre à une certaine distance radiale pour former une fente annulaire, un élément en caoutchouc élastique qui délimite au moins en partie au moins deux chambres diamétralement opposées l'une par rapport à l'autre étant prévu dans la fente annulaire, et lesdites chambres étant remplies d'un liquide hydraulique et étant reliées entre elles par l'intermédiaire d'au moins un canal de trop-plein, **caractérisée en ce que** le canal de trop-plein prend la forme d'un amortisseur d'oscillations passif sans commande externe du flux de liquide.

2. Utilisation d'un coussinet selon la revendication 1, **caractérisée en ce que** le canal de trop-plein (9) prend une forme de spirale, de méandres ou une forme hélicoïdale.

3. Utilisation selon la revendication 1 ou 2, **caractérisée en ce que** le canal de trop-plein est amené au niveau du périmètre extérieur et/ou intérieur du coussinet (1).

4. Utilisation selon l'une quelconque des revendications 1 à 3, **caractérisée en ce que** le canal de trop-plein (9) est délimité par la paroi intérieure de la partie intérieure de boîtier (4) et par une rainure en forme de spirale réalisée dans le périmètre extérieur d'un élément (2) en forme de boulon entourant le coussinet (1).

5. Utilisation selon l'une quelconque des revendications 1 à 4, **caractérisée en ce que** le palier est un palier de guidage d'essieu.
